Europäisches Patentamt

European Patent Office

Office européen des brevets

(11) Publication number: **0 134 617**
**B1**

(12) **EUROPEAN PATENT SPECIFICATION**

(45) Date of publication of patent specification: **20.01.88**

(21) Application number: **84201257.7**

(22) Date of filing: **30.08.84**

(51) Int. Cl.⁴: **F 16 F 1/18,** B 60 G 11/02, B 32 B 17/04

(54) **Fibre-reinforced automotive spring.**

(30) Priority: **08.09.83 US 530186**
**08.09.83 US 530180**

(43) Date of publication of application:
**20.03.85 Bulletin 85/12**

(45) Publication of the grant of the patent:
**20.01.88 Bulletin 88/03**

(84) Designated Contracting States:
**DE FR GB IT SE**

(56) References cited:
**EP-A-0 005 916**
**EP-A-0 106 249**
**DE-B-1 231 967**
**US-A-3 900 357**

**PATENTS ABSTRACTS OF JAPAN, vol. 3, no.
105(M-71), 5th September 1979, page 57M71;
& JP - A - 54 79343 (TORAY K.K.) 25-06-1979**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Lo, King Him
6827 Escondido Drive
Houston Texas 77083 (US)**
Inventor: **Gottenberg, William George
5322 Jason Street
Houston Texas 77096 (US)**

(74) Representative: **Aalbers, Onno et al
P.O. Box 302
NL-2501 CH The Hague (NL)**

Courier Press, Leamington Spa, England.

## Description

The present invention relates to leaf springs and more particularly to a process for manufacturing a spring of a certain design.

This design is known from EP—A 5916, it is concerned with an automotive spring having an inner core portion formed of resin together with reinforcing fibres that are randomly oriented and outer plies formed of multiple layers of unidirectional longitudinal fibres embedded in the resin, said inner core being of constant width and variable thickness.

The invention provides a very convenient method for the manufacture of this spring. Therefore the invention is concerned with a process for manufacturing a composite fibre reinforced thermosetting resin automotive spring having an inner core portion (10) formed of resin together with reinforcing fibres that are randomly oriented, and outer plies formed of layers (11 and 12) of undirectional longitudinal fibres embedded in resin, said inner core having a constant width and a variable thickness, said process comprising:

a) forming a constant width and thickness structure of fibre reinforcement and thermosetting resin, said fibre reinforcement being continuous fibres that extend from one end to the other of the spring;

b) positioning said structure in a mould;

c) compressing said structure to extrude the inner portion thereof out the side of the structure forming outwardly projecting wings (23, 24, 31, 33) having a keystone cross-section, while maintaining in the mould a sufficiently thick layer of fibres on the outer surface of the structure in an aligned position substantially parallel to the longitudinal axis of the spring; and

d) trimming the outwardly projecting wings of the spring to obtain a constant width.

In the attached drawings:

Figure 1 is an elevation view of a leaf spring formed according to the process of this invention.

Figure 2 is a cross section taken along line 2—2 of Figure 1.

Figure 3 is an enlarged section of the spring shown in Figure 1.

Figure 4 shows a step in the process of this invention for making a spring as shown in Figures 1 to 3.

Figure 5 is a cross-section taken along the line 5—5 of Figure 4.

Referring to the attached drawings, there is shown a mono-leaf spring formed from a composite of fibre reinforcing members impregnated with a thermosetting resin, preferably epoxy resin. Other types of resins, for example polyester or vinyl esters, may also be used. The fibre reinforcing members may be glass, carbon or any reinforcing fibres, although glass fibres are most preferred.

The spring as shown in the attached figure comprises a core member 10 and upper and lower layers or plies 11 and 12. The lower layer 12 take the tension load of the spring while the upper layer 11 are normally in compression.

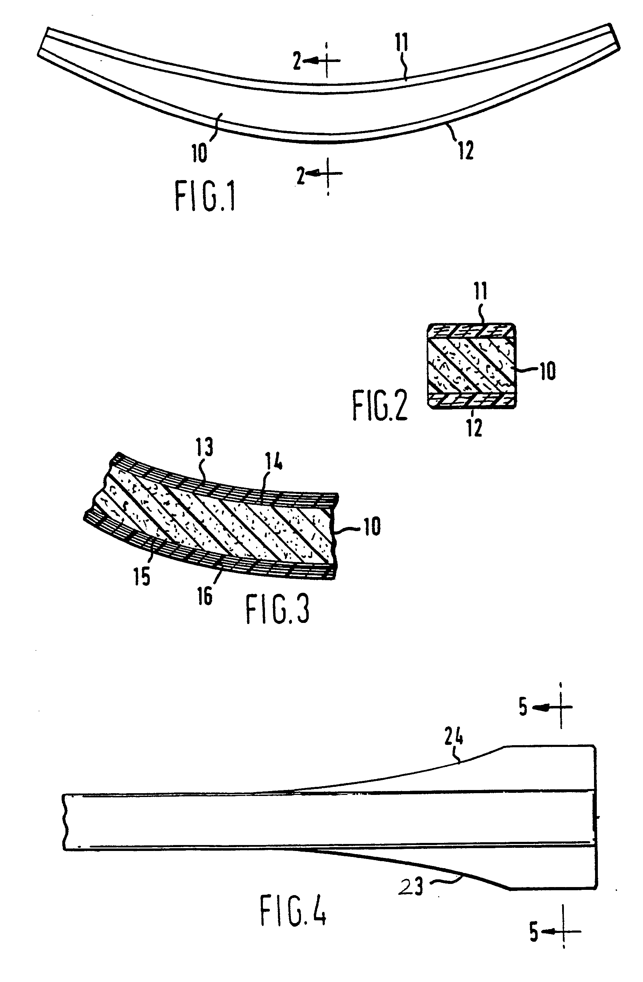

As shown in Figures 2 and 3, layers 11, 12, 13 and 16 comprise longitudinal unidirectional fibres. In particular, the unidirectional fibres should be present in a side-by-side relationship and extend from one end to the other end of the spring.

From the above description, it is seen that the spring is provided with an upper and lower layer of unidirectional glass fibre reinforcing members having a high tensile and compressive strength. Thus, the spring will be capable of absorbing the tension and compression loads placed on it. The use of the core having randomly oriented fibre reinforcing members provides a structure having both transverse as well as longitudinal shear strength in the completed spring.

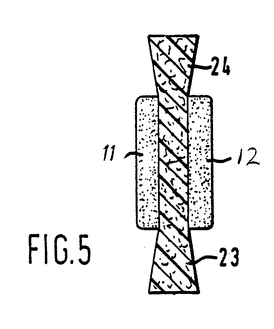

The method for the constructing of single leaf springs is shown in Figures 4 and 5.

The spring is preferably moulded in a heated metal mould by placing the required reinforcing fibres and resin in the mould and the mould is then closed. When the mould is closed, the reinforcing fibres in the outermost layers or plies of the spring 11, 12 are held in tension to ensure that they remain straight and parallel from one end of the spring to the other. As the mould is closed the centre portion of the fibre reinforcement and resin will be forced outward to form the wings 23 and 24. The top portion 20 and bottom portion 21 have a constant cross section while the wings have a variable cross section. After the wings are removed by sawing or otherwise the spring will have a constant width and variable thickness. In addition, the spring will have continuous longitudinal fibres on the top and bottom surfaces in the areas of greatest stress.

Springs made in accordance with the invention have improved resistance to cracking failure.

The spring produced in accordance with the process of this invention can be applied in an automotive leaf spring assembly comprising the mono-leaf spring produced as described hereinbefore and an end fitting which is formed from fibre reinforced thermosetting resin, and which comprises an opening formed in one end of the fitting for receiving the means for fastening the spring to a vehicle, said opening being surrounded by an enlarged circular portion of the fitting, this portion being joined to two tapered sections that are spaced at a distance equal to the thickness of the end of the spring, to provide a close fitting to the end of the spring.

## Claims

1. A process for manufacturing a composite fibre reinforced thermosetting resin automotive spring having an inner core portion (10) formed of resin together with reinforcing fibres that are randomly oriented, and outer plies formed of layers (11 and 12) of undirectional longitudinal fibres embedded in resin, said inner core having a constant width and a variable thickness, said process comprising:

a) forming a constant width and thickness structure of fibre reinforcement and thermosetting resin, said fibre reinforcement being continuous fibres that extend from one end to the other of the spring;

b) positioning said structure in a mould;

c) compressing said structure to extrude the inner portion thereof out the side of the structure forming outwardly projecting wings (23, 24) having a keystone cross-section, while maintaining in the mould a sufficiently thick layer of fibres on the outer surfaces of the structure in an aligned position substantially parallel to the longitudinal axis of the spring; and

d) trimming the outwardly projecting wings of the spring to obtain a constant width.

2. The process of claim 1, wherein said thermosetting resin is an epoxy resin.

3. The process of claim 1, wherein the reinforcing fibres are carbon fibres.

4. The process of claim 1, wherein said reinforcing fibres are glass fibres.

## Patentansprüche

1. Verfahren zur Herstellung von Autofedern aus einem glasfaserverstärkten wärmehärtenden Kunststoff mit einem Kern (10) aus Kunststoff und regellos angeordneten Verstärkungsfasern sowie äußeren Lagen (11 und 12) aus in dem Harz eingebetteten ungerichteten Fäden, wobei der Kern gleichmäßige Breite und variierende Dicke besitzt, dadurch gekennzeichnet, daß man

a) eine Anordnung der Verstärkungsfäden und des wärmehärtenden Harzes mit gleichbleibender Breite und Dicke herstellt, wobei die verstärkenden Fäden Endlosfäden sind, die sich vom einen zum anderen Ende der Feder erstrecken;

b) die Anordnung in eine Form einbringt;

c) die Anordnung derart preßt, daß Masse von innerhalb der Anordnung aus dieser heraus quillt und vorstehende Ansätze bildet, welche einen Schlußstein-ähnlichen Querschnitt besitzen, während in der Form eine ausreichend dicke Fadenlage an den Außenflächen der Anordnung, ausgerichtet im wesentlichen parallel zur Längsachse der Feder, belassen wird, und

d) man die außen vorstehenden Ansätze bis auf gleichbleibende Breite der Feder beschneidet.

2. Verfahren nach Anspruch 1, wobei das wärmehärtende Harz ein Epoxyharz ist.

3. Verfahren nach Anspruch 1, bei dem die verstärkenden Fäden Kohlenstoffäden sind.

4. Verfahren nach Anspruch 1, bei dem die verstärkenden Fäden Glasfäden sind.

## Revendications

1. Un procédé pour réaliser un ressort composite pour l'automobile en résine thermodurcissable renforcée de fibres, comprenant une partie intérieure formant âme (10) formée d'une résine avec des fibres de renforcement qui sont orientées de manière aléatoire, ainsi que des plis extérieurs formés de couches (11, 12) de fibres unidirectionnelles longitudinales noyées dans la résine, l'âme intérieure ayant une largeur constante et une épaisseur variable, ce procédé comprenant les étapes consistant à:

(a) former une structure, de largeur et d'épaisseur constante, de renforcement de fibres et de résine thermodurcissable, ce renforcement de fibres étant formé de fibres continues qui s'étendent d'une extrémité à l'autre du ressort;

(b) positionner cette structure dans un moule;

(c) comprimer cette structure de manière à extruder la partie intérieure de celle-ci hors des côtés latéraux de la structure, en formant des ailes (23, 24) s'étendant vers l'extérieur ayant une forme, en coupe, de clef de voûte, tout en maintenant dans le moule une couche suffisamment épaisse de fibres sur les surfaces extérieures de la structure dans une position d'alignement pratiquement parallèle à l'axe longitudinal du ressort; et

(d) ébavurer les ailes du ressort s'étendant vers l'extérieur, de manière à obtenir une largeur constante.

2. Le procédé de la revendication 1, dans lequel la résine thermodurcissable est une résine époxy.

3. Le procédé de la revendication 1, dans lequel les fibres de renforcement sont des fibres de carbone.

4. Le procédé de la revendication 1, dans lequel les fibres de renforcement sont des fibres de verre.

FIG.1

FIG.2

FIG.3

FIG.4

FIG.5